(19) **Europäisches Patentamt**
**European Patent Office**
**Office européen des brevets**

(11) **EP 3 077 244 B1**

(12) **EUROPÄISCHE PATENTSCHRIFT**

(45) Veröffentlichungstag und Bekanntmachung des Hinweises auf die Patenterteilung:
**24.03.2021  Patentblatt 2021/12**

(21) Anmeldenummer: **14800021.9**

(22) Anmeldetag: **17.11.2014**

(51) Int Cl.:
*B60L 50/50* *(2019.01)*    *B60L 1/02* *(2006.01)*

(86) Internationale Anmeldenummer:
**PCT/EP2014/074721**

(87) Internationale Veröffentlichungsnummer:
**WO 2015/082198 (11.06.2015 Gazette 2015/23)**

(54) **VERFAHREN UND VORRICHTUNG ZUM BETREIBEN EINES FAHRZEUGS**

METHOD AND DEVICE FOR OPERATING A VEHICLE

PROCÉDÉ ET DISPOSITIF PERMETTANT DE FAIRE FONCTIONNER UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2013  DE 102013224896**

(43) Veröffentlichungstag der Anmeldung:
**12.10.2016  Patentblatt 2016/41**

(73) Patentinhaber: **Robert Bosch GmbH**
**70442 Stuttgart (DE)**

(72) Erfinder: **HEYSE, Joerg**
**74354 Besigheim (DE)**

(56) Entgegenhaltungen:
**DE-A1-102011 116 184    KR-A- 20120 073 843**
**US-A1- 2013 238 180**

**Beschreibung**

Die vorliegende Erfindung betrifft ein Verfahren und eine Vorrichtung zum Betreiben eines Fahrzeugs, insbesondere eines Elektro- oder Hybridfahrzeugs. Elektro- oder Hybridfahrzeuge sind solche, welche ihren jeweiligen Antriebsstrang ganz bzw. zumindest zum Teil mit elektrischer Energie betreiben.

Stand der Technik

Bei dem Bau und der Planung von Elektro- und Hybridfahrzeugen, aber auch von Fahrzeugen mit Verbrennungsmotor oder mit alternativen Energiequellen, kommt der effizienten Steuerung bzw. Steuerbarkeit des jeweiligen Fahrzeugs beträchtliche Bedeutung zu. Die effiziente Steuerung bzw. Steuerbarkeit beinhaltet insbesondere ein effizientes, vor allem ein energieeffizientes Betreiben des Fahrzeugs. Für das Betreiben des Fahrzeugs kann eine Vielzahl von Informationen herangezogen werden, beispielsweise Informationen über einen vergangenen und aktuellen Leistungsbedarf des Fahrzeugs.

In der DE 10 2011 054 457 A1 sind ein Verfahren und eine Vorrichtung zur Reichweitenbestimmung eines Elektrofahrzeugs beschrieben. Das Verfahren beinhaltet ein Ermitteln eines Werts nutzbarer Batterieenergie und einen Leistungswert, der zum Erwärmen oder zum Kühlen einer Fahrzeugkabine benötigt wird. Das Verfahren ermittelt einen Wert verfügbarer Batterieenergie, basierend auf dem Wert nutzbarer Batterieenergie und einem abgeschätzten Energiewert zum Bereitstellen der Fahrzeugkabinen-Erwärmung oder -Kühlung. Das Verfahren ermittelt einen Wert kürzlich verbrauchter Energie basierend auf einem Ist-Wert kürzlich verbrauchter HVAC-Energie, einem Wert kürzlich verbrauchter Energie ohne HVAC-Systemlasten und einem Wert kürzlich verbrauchter Energie mit maximalen HVAC-Systemlasten. Das Verfahren ermittelt einen Wert kürzlich zurückgelegter Strecken und ermittelt die Reichweite durch die Bedienung des Werts kürzlich zurückgelegter Strecke durch den Wert kürzlich verbrauchter Energie und Multiplizieren mit dem Wert verfügbarer Batterieenergie.

Die KR 2012 0073843 A beschreibt eine Klimaanlage und ein Verfahren zum Betreiben einer Klimaanlage, welche dazu ausgelegt sind, eine bestimmte Bequemlichkeit und eine bestimmte Fahrreichweite für ein Elektrofahrzeug zu gewährleisten, indem ein Fahrplan für das Elektrofahrzeug basierend auf einer Energiereserve und einem Zustand der Klimaanlage erstellt wird.

In der US 2013/238180 A1 sind ein Elektrofahrzeug und ein Verfahren zum Verteilen von elektrsicher Energie in einem Elektrofahrzeug beschrieben, wobei elektrische Energie innerhalb des Elektrofahrzeugs basierend auf Informationen über den Zustand des Elektrofahrzeugs verteilt wird.

Die DE 10 2011 116184 A1 beschreibt ein Verfahren und eine Vorrichtung zum Betreiben eines Fahrzeugs, wobei ein Leistungsbedarf von Nebenverbrauchern des Fahrzeugs bestimmt wird und davon abhängig eine Fahrbetriebsart, welche eine voraussichtliche Reisezeit beeinflusst, für das Fahrzeug bestimmt wird.

Offenbarung der Erfindung

Die vorliegende Erfindung offenbart ein Verfahren mit den Merkmalen des Patentanspruchs 1 und eine Vorrichtung mit den Merkmalen des Patentanspruchs 7.

Vorteile der Erfindung

Die der vorliegenden Erfindung zugrunde liegende Erkenntnis besteht darin, dass das Betreiben eines Fahrzeugs umso effizienter, insbesondere energieeffizienter, werden kann, je mehr oder je detailliertere Informationen, auch insbesondere über Umweltparameter, welche Informationen über Parameter außerhalb des Fahrzeugs umfassen, dem Betreiben zugrunde gelegt werden.

Zum Betreiben des Fahrzeugs im Sinne dieser Anmeldung gehören insbesondere, aber nicht ausschließlich, eine Steuerung des Fahrzeugsantriebs, der Fahrdynamik, Fahrgeschwindigkeit und Fahrstrategie, vorzugsweise jeweils eine zeitnahe, unmittelbar einer Fahrzeugsituation bevorstehende Steuerung. Dabei können sowohl elektrisch betriebene als auch verbrennungsmotorisch betriebene Fahrzeuge umfasst sein.

Das Betreiben des Fahrzeugs umfasst weiterhin das Steuern von weiteren Fahrzeugkomponenten, etwa eines Navigationsgeräts, zum Bereitstellen einer Reichweitenprädiktion mit Angabe einer empfohlenen durchschnittlichen Fahrgeschwindigkeit und dazu passender Route mit einer Wahlmöglichkeit für den Fahrer, der empfohlenen Route zu folgen bzw. die energie- und/oder effizienzoptimierte automatische Steuerung des Fahrzeugantriebs zu aktivieren.

Ist eine zu befahrende Route für das Fahrzeug bekannt, kann das Betreiben des Fahrzeugs eine gesamtenergetisch optimale Steuerung des Antriebs, der Fahrstrategie und der -geschwindigkeiten entlang der zu befahrenden Route unter Berücksichtigung der Fahrstreckentopologie beinhalten. Eine solche Route kann beispielsweise mittels eines Navigationsgeräts des Fahrzeugs oder einer in der erfindungsgemäßen Vorrichtung ausgebildeter Navigationseinrichtung eingebbar oder automatisch bestimmbar sein.

Die der vorliegenden Erfindung zugrunde liegende Idee besteht nun darin, der zugrunde liegenden Erkenntnis Rechnung zu tragen und einen zu erwartenden Klimatisierungs-Teilleistungsbedarf für das Fahrzeug zu berechnen, welcher sowohl auf fahrzeuginternen Parametern als auch auf externen Parametern, das heißt Umweltparametern, basiert. Mit anderen Worten erfolgt ein effizienz- und/oder energieoptimiertes Betreiben des Fahrzeugs basierend auf einem minimalen Gesamtenergieverbrauch, welcher sowohl ein Leistungsbedarf für ein Bewegen bzw. Fahren des Fahrzeugs, welcher unter den Begriff eines zusätzlichen Teilleistungsbedarf fallen kann, als auch den Klimatisierungs-Teilleistungsbedarf berücksichtigt.

Mit einem Klimatisierungs-Teilleistungsbedarf ist insbesondere ein Teilleistungsbedarf gemeint, welcher nur für die Klimatisierung, das heißt die Beeinflussung eines Klimas, des Fahrzeuginnenraums, aus dem Energievorrat des Fahrzeugs zusätzlich zu allen anderen Leistungsbedarfen geleistet werden muss. Dabei kann vorteilhafterweise etwa eine Wärme, welche aufgrund des Betriebs des Antriebs des Fahrzeugs entsteht oder voraussichtlich entstehen wird, berücksichtigt werden. Im Falle, dass der Antrieb beispielsweise mehr Abwärme pro Zeit erzeugt, als für die Beheizung des Fahrzeuginnenraums insgesamt erforderlich ist, beträgt der Klimatisierungs-Teilleistungsbedarf somit Null, wobei in diesem einfachen Beispiel der Leistungsbedarf für ein Klimagebläse vernachlässigt wird. Soll der Fahrzeuginnenraum auf eine bestimmte Fahrzeuginnenraum-Solltemperatur erwärmt werden, kann jede Person in dem Fahrzeuginnenraum aufgrund ihrer Wärmeabstrahlung zur Verringerung des Klimatisierungs-Teilleistungsbedarfs beitragen. Soll der Fahrzeuginnenraum hingegen gekühlt werden, kann jede Person in dem Fahrzeuginnenraum aufgrund ihrer Wärmeabstrahlung zur Erhöhung des Klimatisierungs-Teilleistungsbedarfs beitragen.

Bei der Berechnung wird ein Fahrzeugmodell des Fahrzeugs verwendet, welches Informationen umfasst, wie sich die Umweltparameter und die fahrzeuginternen Parameter in Kombination auf den Klimatisierungs-Teilleistungsbedarf für das Fahrzeug auswirken können. Somit wird eine präzisere Berechnung des zu erwartenden resultierenden Leistungsbedarfs für das Fahrzeug ermöglicht, das heißt eine bessere Prognose für den zu erwartenden resultierenden Leistungsbedarf. Basierend auf dieser präziseren Berechnung bzw. Prognose kann das Betreiben des Fahrzeugs mit erhöhter Effizienz erfolgen.

Das Fahrzeugmodell umfasst eine Mehrzahl von Formeln und Kausalzusammenhängen, welche insbesondere auch die Umweltparameter und die fahrzeuginternen Parameter miteinander verknüpfen. Dabei beschreibt das Fahrzeugmodell insbesondere ein energetisches Modell. Das Fahrzeugmodell kann auch ein Fahrzeugantriebsmodell umfassen, welches beispielsweise einen Leistungsbedarf für den Fahrzeugantrieb in Abhängigkeit von fahrzeuginternen und/oder von Umweltparametern beinhaltet. Weiterhin kann das Fahrzeugantriebsmodell eine Abwärme pro Zeit in Abhängigkeit von einem Betriebszustand des Fahrzeugantriebs beschreiben. Das Fahrzeugmodell kann auch ein Personenmodell umfassen, welches beispielsweise durchschnittliche Beiträge von Personen zu fahrzeuginternen Parametern beschreibt, etwa eine Beeinflussung einer Fahrzeuginnenraum-Luftfeuchtigkeit durch Ausdünstungen, eine Beeinflussung einer Fahrzeuginnenraum-Temperatur durch Körperwärme etc. Als Teil des Fahrzeugmodells kann ein weitgehend physikalisch basiertes Innenraummodell für den Fahrzeuginnenraum verwendet werden. Alternativ kann auch ein vereinfachter Näherungsansatz verwendet werden.

Beispielsweise kann der Bedarf an thermischer Heiz- bzw. Kühlleistung in Watt mit der Formel

$$\dot{Q}_{stat} = \Delta T \cdot (122.068 + 0.0203 \cdot v)$$

berechnet werden, wobei v die Fahrgeschwindigkeit in m/s und $\Delta T$ eine Differenz zwischen einer Fahrzeuginnenraum- und einer Außentemperatur in Kelvin ist. Die beiden Koeffizienten sind beispielhaft und können z.B. von einem Fahrzeugtyp und von einer aktuellen Anzahl von Personen in dem Fahrzeug als fahrzeuginterne Parameter abhängig sein. Jede Person kann beispielsweise 100 W zur Wärmeleistung in dem Fahrzeuginnenraum beitragen. Die Koeffizienten können weiterhin von Umweltparametern abhängig sein, wie beispielsweise von einer aktuellen Sonnenintensität und einem aktuellen Sonneneinfallswinkel auf das Fahrzeug, wodurch sich eine zusätzliche Wärmeleistung ergeben kann. Die aktuelle Anzahl der Personen, die Sonnenintensität und/oder der Sonneneinfallswinkel können sich auch in additiven Termen zu der obigen Formel niederschlagen.

Eine eventuell genutzte Motor- und/oder Abgasabwärme zur Innenraumbeheizung oder zur Innenraumkühlung (etwa durch eine thermisch betriebene Wärmepumpe, z.B. durch Adsorptionskühlung) können von dem obigen Term abgezogen werden. Die nutzbare Abwärme des Antriebs des Fahrzeugs ist unter Berücksichtigung eines Fahrprofils und/oder der Fahrstrategie (z.B. Segeln) wärmetechnisch vorauszuberechnen. Dies kann etwa über einen Wirkungsgrad des Antriebs und einen empirischen Ansatz zu Wärmeverlusten der Antriebsaggregate an die Umgebung erfolgen.

Eine Innenraumklimatisierung kann eine Luftentfeuchtung umfassen. Der Klimatisierungs-Teilleistungsbedarf für das Fahrzeug umfasst in diesem Fall einen Leistungsbedarf für die Luftentfeuchtung, welcher abhängig sein kann von fahrzeuginternen Parametern wie einer Innenraumfeuchtigkeit, einer Passagieranzahl (menschliche Ausdünstungen), einer Zuluftrate, einer Außenluftfeuchtigkeit, einer Taupunkttemperatur an einer Scheibeninnenseite (Scheibenbeschlag), einer einstellbaren Fahrzeuginnenraum-Sollluftfeuchtigkeit und/oder von einem Wirkungsgrad einer Entfeuchtungseinrichtung des Fahrzeugs.

Für ein Aufheizen oder Abkühlen des Fahrzeuginnenraums bei Fahrtantritt auf eine Fahrzeuginnenraum-Solltemperatur oder eine Temperatur innerhalb eines Fahrzeuginnenraum-Solltemperaturbereichs ist eine aktuelle Fahrzeuginnenraum-Temperatur zu ermitteln. Als weitere fahrzeuginterne Parameter können in eine solche Rechnung eine Gesamtmasse der aufzuheizenden oder abzukühlenden Ausstattung des Fahrzeuginnenraums, eine massengemittelte spezifische Wärmekapazität für alle im Fahrzeuginnenraum aufzuheizende oder abzukühlende Gegenstände und/oder ein Wirkungsgrad einer Heiz- bzw. Kühlvorrichtung (z.B. einer Klimaanlage oder -automatik) berücksichtigt werden.

Der erste zusätzlich zu erwartende Teilleistungsbedarf kann beispielsweise ein Leistungsbedarf für den Antrieb des Fahrzeugs sein. Er kann auch einen Leistungsbedarf bzw. Energieverbrauch durch weitere Fahrzeugkomponenten bzw. Nebenverbraucher, beispielsweise Scheinwerfer, umfassen oder darstellen. Das erfindungsgemäße Verfahren umfasst somit auch ein Verfahren zur Berechnung einer verbrauchsoptimalen Fahrgeschwindigkeit und Fahrzeugbeschleunigung bzw. -verzögerung bei Nebenbedarf, welches sowohl für elektrische als auch für verbrennungsmotorische Antriebe verwendbar ist.

Erfindungsgemäß ist eine Fahrzeugbetriebsbedingung einstellbar, welche auch eine logische Verkettung von Einzelbedingungen darstellen kann. Beispielsweise kann eine solche Einzelbedingung der Fahrzeugbetriebsbedingung sein, dass das Fahrzeug besonders energiesparend betrieben werden soll. Wird der Fahrzeuginnenraum des Fahrzeugs nicht klimatisiert, ist üblicherweise der Betrieb des Fahrzeugs, insbesondere des Antriebsstrangs eines fahrenden Fahrzeugs, umso energiesparender, desto niedriger eine Geschwindigkeit des Fahrzeugs eingestellt wird. Findet jedoch eine Innenraumklimatisierung, oder allgemein eine Beeinflussung des Klimas des Fahrzeuginnenraums statt, kann sich diese einfache Situation verändern.

Für den Betrieb einer Klimaanlage des Fahrzeugs ist beispielsweise ein Wärme- bzw. Kältereservoir notwendig. Bewegt sich das Fahrzeug bei einer Fahrt beispielsweise mit geringer Geschwindigkeit, kann es der Fall sein, dass eine erzeugte Abwärme des Antriebsstrangs zu klein ist, um etwa eine gewünschte Fahrzeuginnenraum-Solltemperatur bereitzustellen. In diesem Beispielfall kann es also energiesparender sein, die Geschwindigkeit des Fahrzeugs auf eine höhere Geschwindigkeit einzustellen, so dass der resultierende Leistungsbedarf für das Fahrzeug als Summe des Klimatisierungs-Teilleistungsbedarfs und eines Teilleistungsbedarfs für das Versorgen des Antriebsstrangs des Fahrzeugs insgesamt minimiert wird, wodurch das Fahrzeug gemäß der vorliegenden Fahrzeugbetriebsbedingung energiesparend betreibbar ist.

Der Klimatisierungs-Teilleistungsbedarf, das heißt der Energieverbrauch des Fahrzeugs aufgrund der Innenraumklimatisierung (HVAC) wird erfindungsgemäß in Abhängigkeit von Umweltparametern sowie in Abhängigkeit von fahrzeuginternen Parametern prognostiziert und dient im Weiteren als Grundlage für das Betreiben des Fahrzeugs. Dadurch kann gesamtenergetisch optimiertes Betreiben des Fahrzeugs, insbesondere des fahrenden Fahrzeugs, erfolgen. Insbesondere kann die Steuerung des Antriebs des Fahrzeugs im Hinblick auf den Gesamtverbrauch, das heißt den resultierenden Leistungsbedarf, verbessert werden.

Wird im Rahmen der Fahrzeugbetriebsbedingung beispielsweise eine besonders große Reichweite des Fahrzeugs gewünscht, können alle Funktionen des Fahrzeugs mit dieser Bedingung im Sinn betrieben werden. Dies kann besonders für Fahrzeuge mit zunehmendem Elektrifizierungsgrad sehr vorteilhaft sein. Auch eine Reichweitenprädiktion, das heißt eine Prognose der Reichweite in Kilometern oder entlang einer vorbestimmten Route des Fahrzeugs, basierend zumindest auf aktuellen Winkeln eines Energiespeichers des Fahrzeugs, kann verbessert werden. Basierend auf der verbesserten Reichweitenprädiktion kann das Fahrzeug wiederum effizienter betrieben werden, beispielsweise indem ein Navigationsgerät des Fahrzeugs automatisch gesteuert wird, eine Route mit besonders großer Reichweite zu berechnen.

Die Reichweitenprädiktion entlang einer oder mehrerer Routen kann beispielsweise auch mit vorprogrammierten oder aktuell abrufbaren Informationen über vorhandene Energietankstellen korreliert werden. Das Navigationsgerät des Fahrzeugs kann somit automatisch gesteuert werden, eine Route anzugeben, gemäß welcher das Fahrzeug innerhalb der prognostizierten Reichweite zu einer der Energietankstellen gelangen kann. Alternativ oder zusätzlich kann ein Warnsignal ausgegeben werden, wenn entlang einer oder mehrerer Routen innerhalb der prognostizierten Reichweite eine Energietankstelle angeordnet ist. Energietankstellen in diesem Zusammenhang können konventionelle Tankstellen für Verbrennungskraftstoffe, aber auch Stromladestellen etc. sein.

Die Erfindung kann vorteilhafter Weise in einem Navigationsgerät integriert oder mit einem Navigationsgerät des Fahrzeugs gekoppelt sein. Alternativ kann auch eine Navigationseinrichtung mit den Eigenschaften und Funktionen eines Navigationsgeräts in die Vorrichtung integriert sein.

Vorteilhafte Ausführungsformen und Weiterbildungen ergeben sich aus den Unteransprüchen sowie aus der Beschreibung unter Bezugnahme auf die Figuren.

Das erfindungsgemäße Verfahren umfasst den Schritt: Erfassen von dritten Datensignalen, welche Informationen über eine erste Route für das Fahrzeug umfassen, wobei die eingestellte Fahrzeugbedingung eine Zielposition umfasst und die erste Route eine Route von einer Startposition des Fahr-zeugs zu der Zielposition ist. Die dritten Datensignale können beispielsweise von einem Navigationsgerät des Fahrzeugs ausgegeben werden, welchem die Zielposition bereitge-stellt wurde. Dabei umfassen die ersten Umweltparameter Umweltparameter entlang der ersten Route und die erste Außentemperatur ist eine aktuelle oder eine zu erwartende, d.h. prognostizierte Außentemperatur an zumindest einem Abschnitt der ersten Route. Das heißt, die ersten Datensignale können Informationen über einen Verlauf von Außen-temperaturen entlang der gesamten ersten Route umfassen. Gemäß dieser Weiterbildung weist das Verfahren weiterhin den Schritt auf: Berechnen, basierend auf einem Verlauf des ermittelten ersten zu erwartenden resultierenden Leistungsbedarfs entlang der ersten Route, eines ersten Energieaufwands des Fahrzeugs entlang der ersten Route.

Das heißt, für einen oder mehrere Punkte entlang der ersten Route oder auch für alle Punkte entlang der ersten Route wird der erste zu erwartende resultierende Leistungsbedarf berechnet. Unter Verwendung eines zu erwartenden zeitlichen Positionsverlaufs des Fahrzeugs entlang der ersten Route kann aus dem Verlauf des resultierenden Leistungsbedarfs der gesamte Energieaufwand des Fahrzeugs entlang der ersten Route berechnet werden.

Der zeitliche Positionsverlauf des Fahrzeugs kann basierend auf einer durchschnittlichen Geschwindigkeit in einem zurückliegenden Zeitraum, beispielsweise einer halben Stunde, erfolgen. Es können aber auch, beispielsweise von einem Navigationsgerät des Fahrzeugs, Informationen über erlaubte und/oder mögliche Geschwindigkeiten für Fahrzeuge entlang der ersten Route als Grundlage für eine Diagnose des zu erwartenden zeitlichen Positionsverlaufs des Fahrzeugs herangezogen werden. Weiterhin kann eine Datenbank mit vorbestimmten oder voreinprogrammierten Daten mit Informationen über ein Fahrverhalten eines Benutzers zusätzlich oder alternativ hinzugezogen werden.

Das Betreiben des Fahrzeugs erfolgt basierend auf dem berechneten ersten Energieaufwand und unter Berücksichtigung der Zielposition. Somit ist, in Abhängigkeit von einer gewünschten Zielposition, ein effizienz- und energieoptimiertes Betreiben des Fahrzeugs möglich. Dabei kann auch ein aktuell verfügbarer Energievorrat des Fahrzeugs mit dem berechneten ersten Energieaufwand verglichen werden. Basierend auf dem Vergleich können automatisch fahrzeuginterne Parameter verändert werden, falls das Erreichen der Zielposition unter Berücksichtigung der verfügbaren Restenergiemenge ein solches Eingreifen erfordert. Beispielsweise könnte die Fahrzeuginnenraum-Solltemperatur auf einen vorbestimmten oder einstellbaren Minimalwert verringert werden.

Gemäß einer weiteren bevorzugten Weiterbildung des erfindungsgemäßen Verfahrens können die ersten Datensignale weiterhin Informationen über zumindest eines der Folgenden umfassen: eine Tageszeit, ein Kalenderdatum, einen Fahrtwind, eine Witterung an mindestens einem ersten Abschnitt entlang der ersten Route, eine Luftfeuchtigkeit an mindestens einem zweiten Abschnitt entlang der ersten Route, und/oder eine Sonneneinstrahlung an mindestens einem dritten Abschnitt entlang der ersten Route. Somit kann der zu erwartende erste Klimatisierungs-Teilleistungsbedarf für das Fahrzeug besonders präzise berechnet werden, wodurch das Betreiben des Fahrzeugs effizienter werden kann. Der erste, zweite und dritte Abschnitt der ersten Route können jeweils gleich, aber auch überlappend oder völlig voneinander verschieden sein.

Vorteilhafterweise werden von den genannten Umweltparametern so viele wie möglich berücksichtigt, beispielsweise alle, welche über eine drahtlose Kommunikationsschnittstelle aktuell empfangbar sind. Aus der Tageszeit und dem Kalenderdatum kann beispielsweise basierend auf der aktuellen ersten Außentemperatur bestimmt werden, welche Außentemperatur an einem bestimmten Abschnitt entlang der ersten Route zu erwarten ist. Der Fahrtwind, die Witterung, beispielsweise Regen oder Schnee, die Luftfeuchtigkeit und die Sonneneinstrahlung sind allesamt Faktoren, welche den zu erwartenden ersten Klimatisierungs-Teilleistungsbedarf für das Fahrzeug unter Umständen signifikant erhöhen oder erniedrigen können.

Gemäß einer weiteren bevorzugten Weiterbildung des Verfahrens umfassen die zweiten Datensignale Informationen über zumindest einen der folgenden fahrzeuginternen Parameter: eine aktuelle Anzahl von Personen in dem Fahrzeug, eine einem Tempomat des Fahrzeugs vorgegebene Sollgeschwindigkeit, ein dem Tempomat des Fahrzeugs vorgegebener Sollgeschwindigkeitsbereich, eine aktuelle Fahrzeuginnenraum-Temperatur., eine aktuelle Fahrzeuginnenraum-Luftfeuchtigkeit, einen aktuellen Fahrzeuginnenraum-$CO_2$-Gehalt, einen aktuellen Energievorrat des Fahrzeugs und/oder eine Scheiben-Innentemperatur einer Scheibe des Fahrzeugs. Diese und andere fahrzeuginterne Parameter können unter Umständen den zu erwartenden ersten Klimatisierungs-Teilleistungsbedarf für das Fahrzeug maßgeblich beeinflussen. Vorteilhafterweise werden auch von diesen fahrzeuginternen Parametern so viele wie möglich erfasst und bei dem Berechnen des zu erwartenden ersten Klimatisierungs-Teilleistungsbedarfs berücksichtigt. Somit kann diese Berechnung besonders präzise durchgeführt werden und das Betreiben des Fahrzeugs entsprechend besonders effizient erfolgen.

Gemäß einer weiteren bevorzugten Weiterbildung des Verfahrens umfasst das Fahrzeugmodell Informationen über zumindest eines der Folgenden: einen Leistungsbedarf des Fahrzeugs bei einer eingeschalteten Leuchte des Fahrzeugs, einen Leistungsbedarf eines Antriebs des Fahrzeugs in Abhängigkeit von einer Geschwindigkeit des Fahrzeugs, einen Leistungsbedarf des Antriebs des Fahrzeugs in Abhängigkeit von einer Beschaffenheit einer Straße, einem Kraftstoffverbrauch des Antriebs des Fahrzeugs in Abhängigkeit von dem Leistungsbedarf des Antriebs, eine Fahrzeugmasse, ein Wirkungsgrad des Antriebs des Fahrzeugs, und/oder einen Leistungsbedarf des Fahrzeugs für das Bereitstellen einer bestimmten Fahrzeuginnenraum-Luftfeuchtigkeit des Fahrzeugs in Abhängigkeit von einer Außen-Luftfeuchtigkeit und/oder einer Fahrzeuginnenraum-Luftfeuchtigkeit.

Das Verfahren umfasst weiterhin die Schritte: Erfassen von vierten Datensignalen, welche Informationen über eine zweite Route umfassen; wobei die zweite Route eine von der ersten Route verschiedene Route von der Startposition des Fahrzeugs zu der Zielposition ist; Erfassen von fünften Daten-signalen, welche Informationen über zweite Umweltparameter entlang der zweiten Route umfassen, darunter Informationen über mindestens eine zweite Außentemperatur an zumindest einem Abschnitt entlang der zweiten Route; Berechnen eines zu erwartenden zweiten Klimatisierungs-Teilleistungsbedarfs für das Fahrzeug entlang der zweiten Route basierend auf den zweiten Datensignalen, den fünften Datensignalen und dem Fahrzeugmodell des Fahrzeugs, wobei der berechnete zweite Klimatisierungs-Teilleistungsbedarf zumindest einen Leistungsbedarf für das Bereitstellen der Fahrzeuginnenraum-Temperatur in Abhängigkeit von der Fahrzeuginnenraum-Solltemperatur und in Abhängigkeit von der mindestens einen zweiten Außentemperatur umfasst; Berechnen mindestens eines zweiten zusätzlichen zu erwartenden Teilleistungsbedarfs für das Fahrzeug; Berechnen eines zweiten zu erwartenden resultierenden Leistungsbedarfs als Summe des zweiten Klimatisierungs-Teilleistungsbedarfs und des mindestens einen zweiten zusätzlichen Teilleistungsbedarfs; Berechnen, basierend auf einem Verlauf des ermittelten zweiten zu erwartenden resultierenden Leistungsbedarfs entlang der zweiten Route, eines zweiten Energieaufwands des Fahrzeugs entlang der zweiten Route; und Bestimmen einer optimalen Route mit einem minimalen Energieaufwand für das Fahrzeug aus einer Menge mit der ersten und der mindestens einen zweiten Route; wobei das Betreiben des Fahrzeugs basierend auf der bestimmten optimalen Route erfolgt.

Somit kann beispielsweise das Fahrzeug derart betrieben werden, dass ein Navigationsgerät des Fahrzeugs angesteuert wird, die bestimmte optimale Route automatisch anzuzeigen.

Gemäß einer weiteren bevorzugten Weiterbildung umfasst das Verfahren den weiteren Schritt: Ermitteln einer Reichweite des Fahrzeugs entlang zumindest der ersten Route, basierend auf einem aktuellen Energievorrat des Fahrzeugs und zumindest dem berechneten ersten zu erwartenden resultierenden Leistungsbedarf des Fahrzeugs entlang zumindest der ersten Route. Die zweiten Datensignale umfassen dabei weiterhin zumindest Informationen über den aktuellen Energievorrat des Fahrzeugs. Das Betreiben des Fahrzeugs erfolgt basierend auf der ermittelten Reichweite des Fahrzeugs. Beispielsweise können mittels einer Steuereinrichtung des Fahrzeugs ein oder mehrere der fahrzeuginternen Parameter verändert werden. Somit kann sichergestellt werden, dass das Fahrzeug mit dem aktuellen Energievorrat die gesamte Route abfahren kann.

Gemäß einer weiteren bevorzugten Weiterbildung umfassen die zweiten Daten Informationen über einen vorbestimmten Soll-Geschwindigkeitsbereich für das Fahrzeug umfassen. Weiterhin wird für jeden Geschwindigkeitswert von Geschwindigkeiten innerhalb des vorbestimmten Soll-Geschwindigkeitsbereichs der erste zusätzliche zu erwartende Teilleistungsbedarf für das Fahrzeug berechnet. Desweiteren wird für jeden Geschwindigkeitswert von Geschwindigkeiten innerhalb des vorbestimmten Soll-Geschwindigkeitsbereichs der erste zusätzliche zu erwartende resultierende Leistungsbedarf als Summe des berechneten zu erwartenden ersten Klimatisierungs-Teilleistungsbedarfs und des jeweiligen ersten zusätzlichen zu erwartenden Teilleistungsbedarfs für das Fahrzeug, entsprechend dem Geschwindigkeitswert, berechnet. Das Verfahren umfasst zudem den weiteren Schritt: Ermitteln derjenigen Geschwindigkeit innerhalb des Soll-Geschwindigkeitsbereichs, für welche der kleinste erste zu erwartende resultierende Leistungsbedarf für das Fahrzeug berechnet wurde. Das Betreiben des Fahrzeugs kann ein Einstellen der aktuellen Geschwindigkeit des Fahrzeugs auf die ermittelte Geschwindigkeit innerhalb des Soll-Geschwindigkeitsbereichs umfassen. Alternativ kann das Fahrzeug auch so betrieben werden, dass etwa eine Anzeigeeinrichtung die ermittelte Geschwindigkeit als Empfehlung ausgibt.

Gemäß einer bevorzugten Weiterbildung der erfindungsgemäßen Vorrichtung umfasst die zweite Datenerfassungseinrichtung eine drahtlose Kommunikationsschnittstelle zum Empfangen von zumindest einigen der zweiten Datensignale. Somit können beispielsweise regelmäßig oder ständig Informationen aus dem Internet abgerufen werden, beispielsweise Informationen eines Wetterdienstes.

Über das Internet bzw. Ethernet können somit beispielsweise zweite Datensignale über routenabhängige Außentemperaturen, Luftfeuchtigkeit und Sonneneinstrahlung eingelesen werden.

Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:

Fig. 1    ein schematisches Flussdiagramm zur Erläuterung eines Verfahrens zum Betreiben eines Fahrzeugs gemäß einem ersten Beispiel;

Fig. 2    ein schematisches Flussdiagramm zur Erläuterung eines Verfahrens zum Betreiben eines Fahrzeugs gemäß einem zweiten Beispiel der vorliegenden Erfindung; und

Fig. 3    ein schematisches Blockdiagramm zur Erläuterung einer erfindungsgemäßen Vorrichtung zum Betreiben eines Fahrzeugs gemäß einer Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen.

Beschreibung der Ausführungsbeispiele

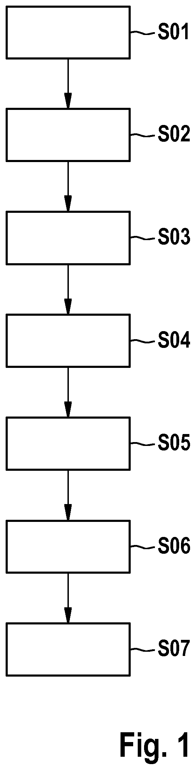

Figur 1 zeigt ein schematisches Flussdiagramm zur Erläuterung eines Verfahrens zum Betreiben eines Fahrzeugs gemäß einem ersten Beispiel der vorliegenden Erfindung.

Das erste Beispiel ist bewusst möglichst einfach gewählt, um das Prinzip zu verdeutlichen. Es soll verstanden sein, dass statt der beschriebenen berücksichtigten Umwelt- und fahrzeuginternen Parameter jeweils eine Vielzahl solcher Parameter berücksichtigt werden kann, und dass weiterhin eine Vielzahl von Berechnungen verschiedener, voneinander abhängiger Teilleistungsbedarfe erfolgen kann.

In einem Schritt S01 wird eine Fahrzeugbetriebsbedingung für das Fahrzeug F eingestellt. Bei dem ersten Beispiel ist die Fahrzeugbetriebsbedingung, dass das Fahrzeug F energieoptimal betrieben werden soll.

In einem Schritt S02 werden erste Datensignalen erfasst, welche Informationen über erste Umweltparameter umfassen. Gemäß dem ersten Beispiel handelt es sich bei den Umweltparametern um eine erste Außentemperatur, welche eine aktuelle Außentemperatur in der unmittelbaren Umgebung des Fahrzeugs F ist.

In einem Schritt S03 werden zweite Datensignale erfasst, welche Informationen über fahrzeuginterne Parameter umfassen. Gemäß dem ersten Beispiel handelt es sich bei den fahrzeuginternen Parametern um einen vorbestimmten Soll-Geschwindigkeitsbereich für das Fahrzeug F, eine Fahrzeuginnenraum-Solltemperatur und eine aktuelle Fahrzeuginnenraum-Temperatur des Fahrzeugs F. Der Soll-Geschwindigkeitsbereich und/oder die Fahrzeuginnenraum-Solltemperatur sind beispielsweise durch einen Nutzer des Fahrzeugs F vorbestimmt.

Es kann auch durch den Nutzer eine Mindestgeschwindigkeit vorgegeben sein, während eine Maximalgeschwindigkeit anhand einer dynamischen Karte als die an der aktuellen Position des Fahrzeugs F gesetzlich maximal erlaubte Geschwindigkeit bestimmbar ist. Der Soll-Geschwindigkeitsbereich kann somit als zwischen der Mindestgeschwindigkeit und der Maximalgeschwindigkeit definiert sein, beispielsweise zwischen 100 km/h und 120 km/h.

In einem Schritt S04 werden mehrere zu erwartende Klimatisierungs-Teilleistungsbedarfe für das Fahrzeug F berechnet, je einer für jede angenommene Geschwindigkeit des Fahrzeugs F in ganzzahligen km/h innerhalb des Soll-Geschwindigkeitsbereichs einschließlich der Grenzen. Bei dem vorliegenden Beispiel werden also einundzwanzig zu erwartende Teilleistungsbedarfe berechnet.

Gemäß dem ersten Beispiel wird dabei ein Fahrzeugmodell verwendet, um zunächst zu berechnen, wie hoch die zu erwartende Abwärme pro Zeit eines Antriebs des Fahrzeugs bei jeder der angenommenen Geschwindigkeiten ist. Dazu wiederum ist in dem Fahrzeugmodell hinterlegt, welche erste Leistung des Antriebs jeweils für das Bereitstellen der angenommenen Fahrzeuggeschwindigkeit in Abhängigkeit von weiteren Parametern notwendig ist und welchen Wirkungsgrad der Antrieb aufweist.

Weiterhin wird mithilfe des Fahrzeugmodells berechnet, welche zweite Leistung für das Erwärmen des Fahrzeuginnenraums von der aktuellen Fahrzeuginnenraum-Temperatur auf die Fahrzeuginnenraum-Solltemperatur und/oder für das Erhalten der aktuellen Fahrzeuginnenraum-Temperatur in Höhe der Fahrzeuginnenraum-Solltemperatur notwendig ist, wobei die aktuelle Außentemperatur berücksichtigt wird.

In einem Schritt S05 wird für jede angenommene Geschwindigkeit ein erster zusätzlicher zu erwartender Teilleistungsbedarfs für das Fahrzeug F berechnet. Gemäß dem ersten Beispiel ist der erste zusätzlich zu erwartende Teillleistungsbedarf die erste Leistung, welche für das Bereitstellen der angenommenen Fahrzeuggeschwindigkeit in Abhängigkeit von weiteren Parametern durch den Antrieb notwendig ist.

In einem Schritt S06 wird - für jede angenommene Geschwindigkeit - ein zu erwartender resultierender Leistungsbedarfs als Summe des berechneten zu erwartenden Klimatisierungs-Teilleistungsbedarfs und des zusätzlichen Teilleistungsbedarfs berechnet. Im vorliegenden Fall ist der resultierende Leistungsbedarf jeweils die Summe aus der ersten Leistung und der zweiten Leistung, minus die Abwärme pro Zeit des Antriebs.

In einem weiteren Schritt wird diejenige der angenommenen Geschwindigkeiten innerhalb des Soll-Geschwindigkeitsbereichs ermittelt, für welche der kleinste zu erwartende resultierende Leistungsbedarf für das Fahrzeug F berechnet wurde.

In einem weiteren Schritt S07 wird eine aktuelle Geschwindigkeit des Fahrzeugs F, beispielsweise mittels eines Tempomaten des Fahrzeugs, auf die ermittelte Geschwindigkeit innerhalb des Soll-Geschwindigkeitsbereichs eingestellt.

Das Verfahren gemäß dem ersten Beispiel kann auf Anforderung eines Nutzers, etwa bei Änderungen des Nutzers an dem Soll-Geschwindigkeitsbereich, aber auch kontinuierlich durchgeführt werden. Denkbar ist auch, dass das Verfahren stets dann automatisch durchgeführt wird, wenn ein Navigationsgerät meldet, dass sich die gesetzlich maximal erlaubte Geschwindigkeit ändert.

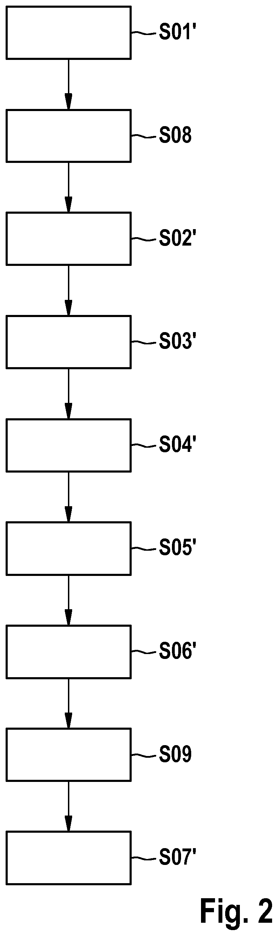

Figur 2 zeigt ein schematisches Flussdiagramm zur Erläuterung eines Verfahrens zum Betreiben eines Fahrzeugs gemäß einem zweiten Beispiel der vorliegenden Erfindung.

Gemäß dem zweiten Beispiel erfolgt in einem Schritt S01' das Erfassen der Fahrzeugbetriebsbedingung dadurch, dass eine Zielposition für das Fahrzeug F vorgegeben wird.

In einem Schritt S08 werden dritte Datensignale erfasst, welche Informationen über eine erste Route für das Fahrzeug F umfassen. Die erste Route ist eine für das Fahrzeug F befahrbare Route von einer aktuellen Position des Fahrzeugs zu der Zielposition. Die dritten Datensignale können beispielsweise von einem Navigationsgerät des Fahrzeugs als Reaktion auf die dem Navigationsgerät übermittelte Zielposition ausgegeben und sodann erfasst werden.

In einem Schritt S02' werden die ersten Datensignale erfasst, welche gemäß dem zweiten Beispiel Informationen über erste Außentemperaturen entlang allen Punkten der ersten Route umfassen. Solche Informationen können beispielsweise über eine drahtlose Kommunikationsschnittstelle 17 von einem Wetterdienst o.ä. empfangen werden. Weiterhin umfassen die ersten Datensignale Informationen über zu erwartende mögliche Geschwindigkeiten für das Fahrzeug entlang der ersten Route. Diese Informationen können beispielsweise von dem Navigationsgerät des Fahrzeugs ausgegeben werden; sie können aber auch über die drahtlose Kommunikationsschnittstelle 17 etwa von einem Verkehrsnachrichtendienst o.ä. empfangen werden.

In einem Schritt S03' werden die zweiten Datensignale erfasst, welche einen Wert für die Fahrzeuginnenraum-Solltemperatur und eine aktuelle Fahrzeuginnenraum-Temperatur, das heißt einen Wert für die aktuelle Fahrzeuginnenraum-Temperatur, des Fahrzeugs F beinhalten.

In einem Schritt S04' wird der zu erwartende erste Klimatisierungs-Teilleistungsbedarf für das Fahrzeug für jeden Punkt entlang der ersten Route berechnet. In die Berechnung fließen, auf der Basis des Fahrzeugmodells, die aktuelle Fahrzeuginnenraum-Temperatur, die Fahrzeuginnenraum-Solltemperatur und die zu erwartende mögliche Geschwindigkeit des Fahrzeug entsprechend an jedem Punkt ein. Das Berechnen S04' erfolgt analog zu dem Berechnen S04 gemäß dem ersten Beispiel, wobei im Gegensatz zum erstenBeispiel, statt den Geschwindigkeiten in dem vorgegebenen Soll-Geschwindigkeitsbereich und der aktuellen Außentemperatur, an jedem Punkt jeweils die zu erwartende mögliche Geschwindigkeit und die dort herrschende Außentemperatur in das Fahrzeugmodell eingesetzt wird.

Gemäß dem zweiten Beispiel wird dabei das Fahrzeugmodell verwendet, um zunächst zu berechnen, wie hoch die zu erwartende Abwärme pro Zeit des Antriebs des Fahrzeugs bei jeder der zu erwartenden möglichen Geschwindigkeiten ist. Dazu wiederum ist mittels des Fahrzeugmodells berechenbar, welche dritte Leistung des Antriebs jeweils für das Bereitstellen der zu erwartenden möglichen Fahrzeuggeschwindigkeit an jedem Punkt in Abhängigkeit von weiteren Parametern notwendig ist und welchen Wirkungsgrad der Antrieb aufweist.

Weiterhin wird mithilfe des Fahrzeugsmodells berechnet, welche vierte Leistung für das Erwärmen des Fahrzeuginnenraums von der aktuellen Fahrzeuginnenraum-Temperatur auf die Fahrzeuginnenraum-Solltemperatur und/oder für das Erhalten der aktuellen Fahrzeuginnenraum-Temperatur in Höhe der Fahrzeuginnenraum-Solltemperatur notwendig ist, wobei die Außentemperatur an jedem Punkt berücksichtigt wird.

In einem Schritt S05' wird für jeden Punkt entlang der ersten Route ein erster zusätzlicher zu erwartender Teilleistungsbedarfs für das Fahrzeug F berechnet. Bei dem zweiten Beispiel ist der erste zusätzlich zu erwartende Teillleistungsbedarf die dritte Leistung zuzüglich eines weiteren Teilleistungsbedarf für weitere Fahrzeugkomponenten wie etwa Multimediageräte, elektrische Scheibenheber etc.

In einem Schritt S06' wird - für jeden Punkt entlang der ersten Route - ein zu erwartender resultierender Leistungsbedarfs als Summe des berechneten zu erwartenden Klimatisierungs-Teilleistungsbedarfs an dem Punkt und des zusätzlichen Teilleistungsbedarfs an dem Punkt berechnet. Analog zu dem ersten Beispiel ist ist der resultierende Leistungsbedarf an jedem Punkt jeweils die Summe aus der dritten Leistung und der vierten Leistung, minus die zu erwartende Abwärme pro Zeit des Antriebs an dem Punkt.

In einem Schritt S09 wird basierend auf einem Verlauf des ermittelten ersten zu erwartenden resultierenden Teilleistungsbedarfs an jedem Punkt entlang der ersten Route ein erster zu erwartender Energieaufwand des Fahrzeugs F entlang der ersten Route berechnet. Dazu kann etwa über den Verlauf als Funktion der Zeit integriert werden.

In einem Schritt S07' wird das Fahrzeug F basierend auf dem ermittelten ersten zu erwartenden resultierenden Leistungsbedarf unter Berücksichtigung der eingestellten Fahrzeugbetriebsbedingung betrieben. Der zu erwartende erste Energieaufwand wird mit einem aktuellen Energievorrat des Fahrzeugs F verglichen. Ist der aktuelle Energievorrat geringer als der zu erwartende erste Energieaufwand, wird ein Warnsignal ausgegeben. Basierend auf dem Warnsignal kann eine Anzeige des Fahrzeugs betrieben werden, etwa eine Warnleuchte. Es können aber auch zusätzliche Schritte erfolgen, wie etwa das automatische Trennen einiger oder aller der weiteren Fahrzeugkomponenten des Fahrzeugs F von einer Leistungsversorgung, beispielsweise bis nach einem weiteren Durchlaufen des Verfahrens der neu berechnete, zu erwartende erste Energieaufwand geringer ist als der dann aktuelle Energievorrat.

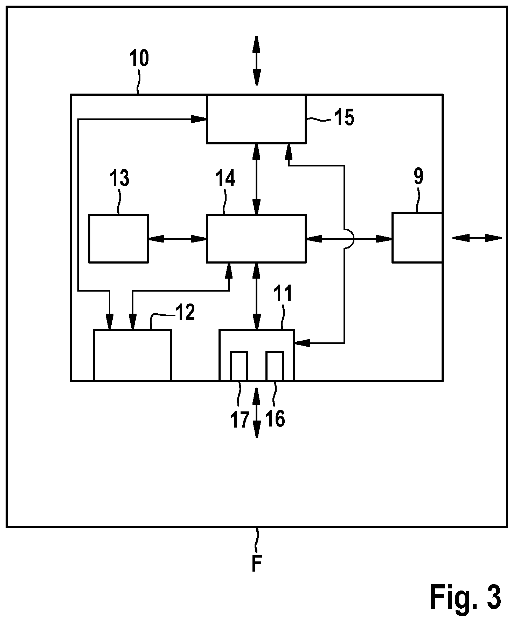

Fig. 3 zeigt ein schematisches Blockdiagramm zur Erläuterung einer Vorrichtung 10 zum Betreiben eines Fahrzeugs F gemäß einer Ausführungsform der vorliegenden Erfindung. Die Vorrichtung 10 ist hier nur knapp beschrieben. Die Funktionen der verschiedenen Einrichtungen der Vorrichtung 10, sowie vielfältige Weiterbildungen und Varianten sind im Vorangehenden, auch in Bezug auf die Verfahren nach dem ersten und zweitenBeispiel, detailliert beschrieben. Es soll verstanden sein, dass die Vorrichtung 10 zum Bereitstellen der beschriebenen Weiterbildungen und Varianten modizierbar ist.

Die Vorrichtung 10 ist innerhalb eines Fahrzeugs F ausgebildet und umfasst eine Eingabeeinrichtung 9. Dabei kann es sich etwa um einen Touchscreen oder eine Schnittstelle, beispielsweise zur Kommunikation mit einem Mobiltelefon handeln.

Die Vorrichtung umfasst weiterhin eine erste Datenerfassungseinrichtung 11 zum Erfassen S02; S02' von ersten Datensignalen, welche Informationen über erste Umweltparameter, darunter Informationen über eine erste Außentemperatur, umfassen, ausgebildet ist. Gemäß der Ausführungsform umfasst die erste Datenerfassungseinrichtung 11 einen Temperatursensor 16 an einer Außenseite des Fahrzeugs F sowie eine drahtlose Kommunikationsschnittstelle 17 zum Empfangen von zumindest einigen der ersten Datensignale. Die drahtlose Kommunikationsschnittstelle 17 kann für eine Ethernet-Verbindung, zum Empfangen von Radiosignalen etc. ausgebildet sein.

Die Vorrichtung umfasst weiterhin eine zweite Datenerfassungseinrichtung 12, welche zum Erfassen S03; S03' von zweiten Datensignalen, welche Informationen über fahrzeuginterne Parameter, darunter Informationen über eine Fahrzeuginnenraum-Solltemperatur für das Fahrzeug F, umfassen, ausgebildet ist. Die zweite Datenerfassungseinrichtung 12 kann beispielsweise eine Klimaautomatik und/oder ein Navigationsgerät umfassen. Es kann sich auch um einen Touchscreen, einen Drehknopf oder einen Schieberegler handeln.

Die Vorrichtung umfasst weiterhin eine Speichervorrichtung 13 zumindest zum Speichern eines Fahrzeugmodells des Fahrzeugs F, wobei das Fahrzeugmodell Informationen über einen Leistungsbedarf des Fahrzeugs F für ein Bereitstellen einer Fahrzeuginnenraum-Temperatur in Abhängigkeit von der Fahrzeuginnenraum-Solltemperatur und in Abhängigkeit von der ersten Außentemperatur umfasst. Mögliche Ausgestaltungen des Fahrzeugmodells sind im Vorangehenden detailliert erläutert.

Die Vorrichtung umfasst weiterhin eine Recheneinrichtung 14 zum Berechnen S04; S04' eines zu erwartenden ersten Klimatisierungs-Teilleistungsbedarfs für das Fahrzeug F basierend zumindest auf den ersten Datensignalen, den zweiten Datensignalen und dem Fahrzeugmodell des Fahrzeugs F ausgebildet ist, wobei der berechnete zu erwartende erste Klimatisierungs-Teilleistungsbedarf zumindest den Leistungsbedarf für das Bereitstellen der Fahrzeuginnenraum-Temperatur in Abhängigkeit von der Fahrzeuginnenraum-Solltemperatur und in Abhängigkeit von der ersten Außentemperatur umfasst.

Die Recheneinrichtung 14 ist weiterhin dazu ausgebildet, mindestens einen ersten zusätzlichen zu erwartenden Teilleistungsbedarf für das Fahrzeug F zu berechnen S05; S05' und einen ersten zu erwartenden resultierenden Leistungsbedarf als Summe des ersten Klimatisierungs-Teilleistungsbedarfs und des mindestens einen ersten zusätzlichen Teilleistungsbedarfs zu berechnen S06; S06'.

Eine Steuereinrichtung 15 der Vorrichtung 10 ist dazu ausgebildet, das Fahrzeug F basierend auf dem ermittelten ersten zu erwartenden resultierenden Leistungsbedarf unter Berücksichtigung der Fahrzeugbetriebsbedingung zu betreiben S07; S07'.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Wenn in dieser Beschreibung die Rede von einem Navigationsgerät ist, so soll darunter verstanden sein, dass es sich dabei sowohl um ein mit der erfindungsgemäßen Vorrichtung innerhalb des Fahrzeugs gekoppeltes Navigationsgerät bzw. ein Navigationsassistenzsystem als auch um eine in der Vorrichtung enthaltene Navigationseinrichtung handeln kann. Eine solche Navigationseinrichtung kann mit allen Funktionen und Eigenschaften eines separaten Navigationsgeräts bzw. Navigationsassistenzsystems ausgestattet sein.

Als Option kann weiterhin ein Leistungsbedarf bzw. ein Energieverbrauch von Nebenverbrauchern für eine Luftentfeuchtung, eine Scheiben- und/oder Spiegelbeheizung, eine Sitzheizung und/oder eine Zuluftaufheizung getrennt berechnet und/oder ausgegeben werden. Das Ausgeben kann an die Steuereinrichtung des Fahrzeugs und/oder an eine Anzeigeeinrichtung, welche innerhalb des Fahrzeugs gebildet ist, erfolgen. Somit ist eine noch genauere Berechnung bzw. Prognose des Leistungsbedarfs bzw. Energieverbrauchs und damit auch eine energieoptimierte Steuerung des Antriebs des Fahrzeugs möglich.

Zusätzlich oder alternativ kann, beispielsweise mittels der Recheneinrichtung 14, ein Energieeinsparungspotential, das heißt eine Reduzierung des Klimatisierungs-Teillastbedarfs durch Betreiben einer Klimaautomatik, beispielsweise eines HVAC, im Umluftbetrieb als Fahrzeugbetriebsbedingung berechnet werden. Abhängig von einem Grad einer Innenraumluftfeuchtigkeit, einer Scheibeninnentemperatur, einer aktuellen Anzahl von Passagieren und/oder einem $CO_2$-Gehalt im Innenraum als fahrzeuginterne Parameter kann das Betreiben S07 des Fahrzeugs F das automatische Einstellen des Umluftbetriebs mit optimierten Umluftbetrieb-Parametern umfassen.

Alternativ oder zusätzlich kann das Betreiben S07; S07' des Fahrzeugs umfassen, dass einem Nutzer des Fahrzeugs F eine Empfehlung für den Umluftbetrieb mit den optimierten Umluftbetrieb-Parametern geboten wird. Der eingestellte Umluftbetrieb kann als fahrzeuginterner Parameter bei einer erneuten Durchführung des erfindungsgemäßen Verfahrens mit berücksichtigt werden.

Das Fahrzeugmodell des Fahrzeugs kann benutzerspezifisch ausgebildet sein. Beispielsweise kann ein Nutzerprofil einprogrammierbar und/oder auswählbar sein, gemäß welchem eine oder mehrere Eigenschaften des Fahrzeugmodells im Vergleich mit einem allgemeinen, nicht nutzerspezifischen Profil, verändert sind. Beispielsweise kann ein durchschnittlicher Kraftstoffverbrauch oder Energieaufwand pro mit dem Fahrzeug zurückgelegtem Kilometer bei verschiedenen Benutzern unterschiedlich sein. Vorteilhafterweise kann das Fahrzeugmodell auch spezifisch für einen bestimmten Fahrzeugtyp ausgebildet sein.

Wurde im Verlauf des erfindungsgemäßen Verfahrens beispielsweise ein zu erwartender Energieaufwand entlang einer Route berechnet, kann automatisch, beispielsweise mittels eines Navigationsgeräts des Fahrzeugs, überprüft werden, ob diese Route tatsächlich abgefahren wurde. Wurde die Route abgefahren, kann durch Vergleichen eines Energievorrats bei Beginn der Route und eines Energievorrats nach Abfahren der Route der tatsächlich aufgewendete Energieaufwand berechnet werden. Der tatsächliche Energieaufwand kann mit dem berechneten zu erwartenden Energieaufwand verglichen werden und das Fahrzeugmodell kann automatisch basierend auf dem Ergebnis des Vergleichs angepasst werden. Das Fahrzeugmodell kann weiterhin kontinuierlich angepasst werden, indem beispielsweise über mehrere Fahrsituationen, -routen, -tage, Tages- und Jahreszeiten ein Gesamtenergieaufwand der Klimaautomatik ausgelesen wird und dieser mit den dafür verantwortlichen Eingangsgrößen über halbempirische, funktionale Zusammenhänge korreliert wird.

Die Fahrzeugbetriebsbedingung kann einen Komfortgrad aus einer Liste von Nutzern des Fahrzeugs F wählbaren Komfortgraden mit innerhalb der Liste aufsteigendem durchschnittlichen Leistungsbedarf bestimmen, wobei jeder Komfortgrad eine Sammlung von erlaubten Wertebereichen für die fahrzeuginternen Parameter angibt.

**Patentansprüche**

1. Verfahren zum Betreiben eines Fahrzeugs mit den Schritten:

     • Einstellen (S01; S01') einer Fahrzeugbetriebsbedingung;
     • Erfassen (S02; S02') von ersten Datensignalen, welche Informationen über erste Umweltparameter, darunter Informationen über eine erste Außentemperatur, umfassen;
     • Erfassen (S03; S03') von zweiten Datensignalen, welche Informationen über fahrzeuginterne Parameter, darunter Informationen über eine Fahrzeuginnenraum-Solltemperatur für das Fahrzeug (F), umfassen;
     • Berechnen (S04; S04') eines zu erwartenden ersten Klimatisierungs-Teilleistungsbedarfs für das Fahrzeug (F), basierend zumindest auf den ersten Datensignalen, den zweiten Datensignalen und einem Fahrzeugmodell des Fahrzeugs (F),
     wobei der berechnete zu erwartende erste Klimatisierungs-Teilleistungsbedarf zumindest einen Leistungsbedärf, gemäß dem Fahrzeugmodell, für ein Bereitstellen einer Fahrzeuginnenraum-Temperatur in Abhängigkeit von der Fahrzeuginnenraum-Solltemperatur und in Abhängigkeit von der ersten Außentemperatur umfasst;
     • Berechnen (S05; S05') mindestens eines ersten zusätzlichen zu erwartenden Teilleistungsbedarfs für das Fahrzeug (F);
     • Berechnen (S06; S05') eines ersten zu erwartenden resultierenden Leistungsbedarfs als Summe des berechneten zu erwartenden ersten Klimatisierungs-Teilleistungsbedarfs und des mindestens einen ersten zusätzlichen Teilleistungsbedarfs;
     • Betreiben (S07; S07') des Fahrzeugs (F) basierend auf dem ermittelten ersten zu erwartenden resultierenden Leistungsbedarf unter Berücksichtigung der eingestellten Fahrzeugbetriebsbedingung;
     • Erfassen (S08) von dritten Datensignalen, welche Informationen über eine erste Route für das Fahrzeug (F) umfassen;
     wobei die eingestellte Fahrzeugbetriebsbedingung eine Zielposition umfasst und die erste Route eine Route von einer Startposition des Fahrzeugs zu der Zielposition ist;
     wobei die ersten Umweltparameter Umweltparameter entlang der ersten Route umfassen und die erste Außentemperatur eine Außentemperatur an zumindest einem Abschnitts der ersten Route ist; und
     • Berechnen (S09), basierend auf einem Verlauf des ermittelten ersten zu erwartenden resultierenden Leistungsbedarfs entlang der ersten Route, eines ersten Energieaufwands des Fahrzeugs (F) entlang der ersten Route;
     wobei das Betreiben (S07) des Fahrzeugs (F) basierend auf dem ersten Energieaufwand und unter Berücksichtigung der Zielposition erfolgt;
     • Erfassen von vierten Datensignalen, welche Informationen über eine zweite Route umfassen;
     wobei die zweite Route eine von der ersten Route verschiedene Route von der Startposition des Fahrzeugs zu der Zielposition ist;
     • Erfassen von fünften Datensignalen, welche Informationen über zweite Umweltparameter entlang der zweiten Route umfassen, darunter Informationen über mindestens eine zweite Außentemperatur an zumindest einem Abschnitt entlang der zweiten Route;
     • Berechnen eines zu erwartenden zweiten Klimatisierungs-Teilleistungsbedarfs für das Fahrzeug (F) entlang der zweiten Route basierend auf den zweiten Datensignalen, den fünften Datensignalen und dem Fahrzeugmodell des Fahrzeugs (F),

wobei der berechnete zweite Klimatisierungs-Teilleistungsbedarf zumindest einen Leistungsbedarf für das Bereitstellen der Fahrzeuginnenraum-Temperatur in Abhängigkeit von der Fahrzeuginnenraum-Solltemperatur und in Abhängigkeit von der mindestens einen zweiten Außentemperatur umfasst;

• Berechnen mindestens eines zweiten zusätzlichen zu erwartenden Teilleistungsbedarfs für das Fahrzeug (F);

• Berechnen eines zweiten zu erwartenden resultierenden Leistungsbedarfs als Summe des zweiten Klimatisierungs-Teilleistungsbedarfs und des mindestens einen zweiten zusätzlichen Teilleistungsbedarfs;

• Berechnen, basierend auf einem Verlauf des ermittelten zweiten zu erwartenden resultierenden Leistungsbedarfs entlang der zweiten Route, eines zweiten Energieaufwands des Fahrzeugs (F) entlang der zweiten Route; und

• Bestimmen einer optimalen Route mit einem minimalen Energieaufwand für das Fahrzeug (F) aus einer Menge mit der ersten und der mindestens einen zweiten Route;

wobei das Betreiben des Fahrzeugs (F) basierend auf der bestimmten optimalen Route erfolgt.

2. Verfahren nach Anspruch 1, wobei die ersten Datensignale weiterhin Informationen über zumindest einen der folgenden Umweltparameter umfassen: eine Tageszeit, ein Kalenderdatum, einen Fahrtwind, eine Witterung an mindestens einem ersten Abschnitt entlang der ersten Route, eine Luftfeuchtigkeit an mindestens einem zweiten Abschnitt entlang der ersten Route und/oder eine Sonneneinstrahlung an mindestens einem dritten Abschnitt entlang der ersten Route.

3. Verfahren nach einem der vorangehenden Ansprüche 1 oder 2, wobei die zweiten Datensignale weiterhin Informationen über zumindest einen der folgenden fahrzeuginternen Parameter umfassen: eine aktuelle Anzahl von aktuellen Personen in dem Fahrzeug (F), eine einem Tempomat des Fahrzeugs (F) vorgegebene Sollgeschwindigkeit oder ein dem Tempomat des Fahrzeugs (F) vorgegebener Sollgeschwindigkeitsbereich, eine aktuelle Fahrzeuginnenraum-Temperatur, eine aktuelle Fahrzeuginnenraum-Luftfeuchtigkeit, einen aktuellen Fahrzeuginnenraum-CO2-Gehalt, einen aktuellen Energievorrat des Fahrzeugs (F) und/oder eine Scheiben-Innentemperatur einer Scheibe des Fahrzeugs.

4. Verfahren nach einem der vorangehenden Ansprüche 1 bis 3, wobei das Fahrzeugmodell Informationen über zumindest eines der Folgenden umfasst: einen Leistungsbedarf des Fahrzeugs (F) bei einer eingeschalteten Leuchte des Fahrzeugs (F), einen Leistungsbedarf eines Antriebs des Fahrzeugs (F) in Abhängigkeit von einer Geschwindigkeit des Fahrzeugs, einen Leistungsbedarf des Antriebs des Fahrzeugs (F) in Abhängigkeit von einer Beschaffenheit einer Straße, einen Kraftstoffverbrauch des Antriebs des Fahrzeugs (F) in Abhängigkeit von dem Leistungsbedarf des Antriebs, eine Fahrzeugmasse, einen Wirkungsgrad des Antriebs des Fahrzeugs (F), und/oder einen Leistungsbedarf des Fahrzeugs (F) für das Bereitstellen einer bestimmten Fahrzeuginnenraum-Luftfeuchtigkeit des Fahrzeugs (F) in Abhängigkeit von einer Außen-Luftfeuchtigkeit.

5. Verfahren nach einem der vorangehenden Ansprüche 1 oder 3 mit den weiteren Schritten:

• Ermitteln einer Reichweite des Fahrzeugs (F) entlang zumindest der ersten Route, basierend auf einem aktuellen Energievorrat des Fahrzeugs und basierend auf zumindest dem berechneten ersten zu erwartenden resultierenden Leistungsbedarf des Fahrzeugs (F) entlang zumindest der ersten Route; wobei die zweiten Datensignale weiterhin zumindest Informationen über den aktuellen Energievorrat des Fahrzeugs (F) umfassen;

wobei das Betreiben des Fahrzeugs (F) basierend auf der ermittelten Reichweite des Fahrzeugs (F) erfolgt.

6. Verfahren nach einem der vorangehenden Ansprüche 1 bis 5,
wobei die zweiten Daten Informationen über einen vorbestimmten Soll-Geschwindigkeitsbereich für das Fahrzeug (F) umfassen;
wobei für jeden Geschwindigkeitswert von Geschwindigkeiten innerhalb des vorbestimmten Soll-Geschwindigkeitsbereichs der erste zusätzliche zu erwartende Teilleistungsbedarf für das Fahrzeug (F) berechnet wird;
wobei für jeden Geschwindigkeitswert von Geschwindigkeiten innerhalb des vorbestimmten Soll-Geschwindigkeitsbereichs der erste zusätzliche zu erwartende resultierende Leistungsbedarf als Summe des berechneten zu erwartenden ersten Klimatisierungs-Teilleistungsbedarfs und des jeweiligen ersten zusätzlichen zu erwartenden Teilleistungsbedarfs für das Fahrzeug (F), entsprechend dem Geschwindigkeitswert, berechnet wird; und
wobei das Verfahren weiterhin den Schritt aufweist:

• Ermitteln derjenigen Geschwindigkeit innerhalb des Soll-Geschwindigkeitsbereichs, für welche der kleinste erste zu erwartende resultierende Leistungsbedarf für das Fahrzeug (F) berechnet wurde; und

wobei das Betreiben (S07) des Fahrzeugs ein Einstellen der aktuellen Geschwindigkeit des Fahrzeugs (F) auf die ermittelte Geschwindigkeit innerhalb des Soll-Geschwindigkeitsbereichs umfasst.

7. Vorrichtung (10) zum Betreiben eines Fahrzeugs (F) mit:

einer an dem Fahrzeug ausgebildeten Eingabeeinrichtung (10), einer an dem Fahrzeug (F) ausgebildeten ersten Datenerfassungseinrichtung (11), einer an dem Fahrzeug (F) ausgebildeten zweiten Datenerfassungseinrichtung (12), einer an dem Fahrzeug (F) ausgebildeten Speichereinrichtung (13), einer an dem Fahrzeug (F) ausgebildeten Recheneinrichtung (14) und einer an dem Fahrzeug (F) ausgebildeten Steuervorrichtung (15);
wobei die Eingabeeinrichtung (9) zum Einstellen (S01) einer Fahrzeugbetriebsbedingung ausgebildet ist;
wobei die erste Datenerfassungseinrichtung (11) zum Erfassen (S02; S02') von ersten Datensignalen, welche Informationen über erste Umweltparameter, darunter Informationen über eine erste Außentemperatur, umfassen, ausgebildet ist;
wobei die zweite Datenerfassungseinrichtung (12) zum Erfassen (S03; S03') von zweiten Datensignalen, welche Informationen über fahrzeuginterne Parameter, darunter Informationen über eine Fahrzeuginnenraum-Solltemperatur für das Fahrzeug (F), umfassen, ausgebildet ist;
wobei die Speichervorrichtung (13) zumindest zum Speichern eines Fahrzeugmodells des Fahrzeugs (F) ausgebildet ist, wobei das Fahrzeugmodell Informationen über einen Leistungsbedarf des Fahrzeugs (F) für ein Bereitstellen einer Fahrzeuginnenraum-Temperatur in Abhängigkeit von der Fahrzeuginnenraum-Solltemperatur und in Abhängigkeit von der ersten Außentemperatur umfasst;
wobei die Recheneinrichtung (14) zum Berechnen (S04; S04') eines zu erwartenden ersten Klimatisierungs-Teilleistungsbedarfs für das Fahrzeug (F) basierend zumindest auf den ersten Datensignalen, den zweiten Datensignalen und dem Fahrzeugmodell des Fahrzeugs (F) ausgebildet ist,
wobei der berechnete zu erwartende erste Klimatisierungs-Teilleistungsbedarf zumindest den Leistungsbedarf für das Bereitstellen der Fahrzeuginnenraum-Temperatur in Abhängigkeit von der Fahrzeuginnenraum-Solltemperatur und in Abhängigkeit von der ersten Außentemperatur umfasst;
wobei die Recheneinrichtung (14) weiterhin dazu ausgebildet ist, mindestens einen ersten zusätzlichen zu erwartenden Teilleistungsbedarf für das Fahrzeug (F) zu berechnen (S05; S05') und

einen ersten zu erwartenden resultierenden Leistungsbedarf als Summe des ersten Klimatisierungs-Teilleistungsbedarfs und des mindestens einen ersten zusätzlichen Teilleistungsbedarfs zu berechnen (S06; S06');
wobei die Steuereinrichtung (15) dazu ausgebildet ist, das Fahrzeug (F) basierend auf dem ermittelten ersten zu erwartenden resultierenden Leistungsbedarf unter Berücksichtigung der Fahrzeugbetriebsbedingung zu betreiben (S07; S07'); und
wobei die Vorrichtung (10) zum Durchführen des Verfahrens gemäß einem der vorangehenden Ansprüche 1 bis 6 eingerichtet ist.

8. Vorrichtung nach Anspruch 7,
wobei die zweite Datenerfassungseinrichtung (12) eine drahtlose Kommunikationsschnittstelle (16) zum Empfangen von zumindest einigen der zweiten Datensignale umfasst.

**Claims**

1. Method for operating a vehicle, with the steps of:

• setting (S01; S01') a vehicle operating condition;
• detecting (S02; S02') first data signals, which comprise information on first environmental parameters, including information on a first outside temperature;
• detecting (S03; S03') second data signals, which comprise information on vehicle-internal parameters, including information on a target vehicle interior temperature for the vehicle (F);
• calculating (S04; S04') an expected first partial air-conditioning power requirement for the vehicle (F), based at least on the first data signals, the second data signals and a vehicle model of the vehicle (F),
wherein the calculated expected first partial air-conditioning power requirement comprises at least one power requirement, according to the vehicle model, for providing a vehicle interior temperature depending on the target vehicle interior temperature and depending on the first outside temperature;
• calculating (S05; S05') at least one first additional expected partial power requirement for the vehicle (F);
• calculating (S06; S05') a first expected resulting power requirement as the sum of the calculated expected first partial air-conditioning power requirement and the at least one first additional partial power requirement;

• operating (S07; S07') the vehicle (F) on the basis of the determined first expected resulting power requirement while taking into account the set vehicle operating condition;

• detecting (S08) third data signals, which comprise information on a first route for the vehicle (F);

wherein the set vehicle operating condition comprises a destination position and the first route is a route from a starting position of the vehicle to the destination position;

wherein the first environmental parameters comprise environmental parameters along the first route and the first outside temperature is an outside temperature on at least one section of the first route; and

• calculating (S09) a first expenditure of energy of the vehicle (F) along the first route, on the basis of a progression of the determined first expected resulting power requirement along the first route;

wherein operating (S07) the vehicle (F) takes place on the basis of the first expenditure of energy and while taking into account the destination position;

• detecting fourth data signals, which comprise information on a second route;

wherein the second route is a route different from the first route from the starting position of the vehicle to the destination position;

• detecting fifth data signals, which comprise information on second environmental parameters along the second route, including information on at least one second outside temperature on at least one section along the second route;

• calculating an expected second partial air-conditioning power requirement for the vehicle (F) along the second route on the basis of the second data signals, the fifth data signals and the vehicle model of the vehicle (F);

wherein the calculated second partial air-conditioning power requirement comprises at least one power requirement for providing the vehicle interior temperature depending on the target vehicle interior temperature and depending on the at least one second outside temperature;

• calculating at least one second additional expected partial power requirement for the vehicle (F);

• calculating a second expected resulting power requirement as the sum of the second partial air-conditioning power requirement and the at least one second additional partial power requirement;

• calculating a second expenditure of energy of the vehicle (F) along the second route, on the basis of a progression of the determined second expected resulting power requirement along the second route; and

• determining an optimal route with a minimal expenditure of energy for the vehicle (F) from a set comprising the first and the at least one second route;

wherein operating the vehicle (F) takes place on the basis of the determined optimal route.

2. Method according to Claim 1, wherein the first data signals also comprise information on at least one of the following environmental parameters: a time of day, a calendar date, an airflow, weather conditions on at least one first section along the first route, air humidity on at least one second section along the first route and/or incident solar radiation on at least one third section along the first route.

3. Method according to one of the preceding Claims 1 or 2, wherein the second data signals also comprise information on at least one of the following vehicle-internal parameters: a current number of persons currently in the vehicle (F), a target speed specified to a cruise control of the vehicle (F) or a target speed range specified to the cruise control of the vehicle (F), a current vehicle interior temperature, a current vehicle interior air humidity, a current vehicle interior $CO_2$ content, a current energy supply of the vehicle (F) and/or an inside window pane temperature of a window pane of the vehicle.

4. Method according to one of the preceding Claims 1 to 3, wherein the vehicle model comprises information on at least one of the following: a power requirement of the vehicle (F) when a light of the vehicle (F) is switched on, a power requirement of a drivetrain of the vehicle (F) depending on a speed of the vehicle, a power requirement of the drivetrain of the vehicle (F) depending on a composition of a street, a fuel consumption of the drivetrain of the vehicle (F) depending on the power requirement of the drivetrain, a vehicle mass, an efficiency of the drivetrain of the vehicle (F), and/or a power requirement of the vehicle (F) for providing a determined vehicle interior air humidity of the vehicle (F) depending on an outside air humidity.

5. Method according to one of the preceding Claims 1 or 3 with the further steps of:

• determining a cruising range of the vehicle (F) along at least the first route, on the basis of a current energy reserve of the vehicle and on the basis of at least the calculated first expected resulting power requirement of the vehicle (F) along at least the first route; the second data signals also comprising at least information on the current energy reserve of the vehicle (F);

wherein operating the vehicle (F) takes place on the basis of the determined cruising range of the vehicle (F).

6. Method according to one of the preceding Claims 1 to 5,
wherein the second data comprise information on a predetermined target speed range for the vehicle (F);
wherein the first additional expected partial power requirement for the vehicle (F) is calculated for each speed value of speeds within the predetermined target speed range;
wherein, for each speed value of speeds within the predetermined target speed range, the first additional expected resulting power requirement is calculated as the sum of the calculated expected first partial air-conditioning power requirement and the respective first additional expected partial power requirement for the vehicle (F), in accordance with the speed value; and
wherein the method also comprises the step of:

• determining that speed within the target speed range for which the smallest first expected resulting power requirement for the vehicle (F) was calculated; and wherein operating (S07) the vehicle comprises setting the current speed of the vehicle (F) to the determined speed within the target speed range.

7. Device (10) for operating a vehicle (F) with:

an input device (10) formed on the vehicle, a first data detection device (11) formed on the vehicle (F), a second data detection device (12) formed on the vehicle (F), a storage device (13) formed on the vehicle (F), a computing device (14) formed on the vehicle (F) and a control device (15) formed on the vehicle (F);
wherein the input device (9) is designed to set (S01) a vehicle operating condition;
wherein the first data detection device (11) is designed to detect (S02; S02') first data signals, which comprise information on first environmental parameters, including information on a first outside temperature;
wherein the second data detection device (12) is designed to detect (S03; S03') second data signals, which comprise information on vehicle-internal parameters, including information on a target vehicle interior temperature for the vehicle (F);
wherein the storage device (13) is designed at least to store a vehicle model of the vehicle (F), the vehicle model comprising information on a power requirement of the vehicle (F) for providing a vehicle interior temperature depending on the target vehicle interior temperature and depending on the first outside temperature;
wherein the computing device (14) is designed to calculate (S04; S04') an expected first partial air-conditioning power requirement for the vehicle (F) on the basis at least of the first data signals, the second data signals and the vehicle model of the vehicle (F),
wherein the calculated expected first partial air-conditioning power requirement comprises at least the power requirement for providing the vehicle interior temperature depending on the target vehicle interior temperature and depending on the first outside temperature;
wherein the computing device (14) is also designed to calculate (S05; S05') at least one first additional expected partial power requirement for the vehicle (F) and
to calculate (S06; S06') a first expected resulting power requirement as the sum of the first partial air-conditioning power requirement and the at least one first additional partial power requirement;
wherein the control device (15) is designed to operate (S07; S07') the vehicle (F) on the basis of the determined first expected resulting power requirement while taking into account the vehicle operating condition; and
wherein the device (10) is set up for carrying out the method according to one of the preceding Claims 1 to 6.

8. Device according to Claim 7,
wherein the second data detection device (12) comprises a wireless communication interface (16) for receiving at least some of the second data signals.

**Revendications**

1. Procédé permettant de faire fonctionner un véhicule, comprenant les étapes consistant à :

• régler (S01 ; S01') une condition de fonctionnement de véhicule ;
• acquérir (S02 ; S02') des premiers signaux de données comprenant des informations concernant des premiers paramètres d'environnement, y compris des informations concernant une première température extérieure ;
• acquérir (S03 ; S03') des deuxièmes signaux de données comprenant des informations concernant des paramètres internes au véhicule, y compris des informations concernant une température de consigne d'un habitacle de véhicule pour le véhicule (F) ;
• calculer (S04 ; S04') une première demande de puissance partielle de climatisation à attendre pour le véhicule (F), sur la base au moins des premiers signaux de données, des deuxièmes signaux de données et d'un modèle de véhicule du véhicule (F),

dans lequel la première demande de puissance partielle de climatisation à attendre comprend au moins une demande de puissance, selon le modèle de véhicule, pour fournir une température d'habitacle de véhicule en fonction de la température de consigne d'un habitacle de véhicule et en fonction de la première température extérieure ;

• calculer (S05 ; S05') au moins une première demande de puissance partielle à attendre supplémentaire pour le véhicule (F) ;

• calculer (S06 ; S05') une première demande de puissance résultante à attendre comme la somme de la première demande de puissance partielle de climatisation à attendre calculée et de ladite au moins une première demande de puissance partielle supplémentaire ;

• faire fonctionner (S07 ; S07') le véhicule (F) sur la base de la première demande de puissance résultante à attendre déterminée en tenant compte de la condition de fonctionnement de véhicule réglée ;

• acquérir (S08) des troisièmes signaux de données comprenant des informations concernant un premier itinéraire pour le véhicule (F) ;

la condition de fonctionnement de véhicule réglée comprenant une position de destination, et le premier itinéraire étant un itinéraire d'une position de départ du véhicule à la position de destination ;

les premiers paramètres d'environnement comprenant des paramètres d'environnement le long du premier itinéraire et la première température extérieure étant une température extérieure sur au moins un tronçon du premier itinéraire ; et

• calculer (S09), sur la base d'une courbe de la première demande de puissance résultante à attendre déterminée le long du premier itinéraire, une première consommation d'énergie du véhicule (F) le long du premier itinéraire ;

l'exploitation (S07) du véhicule (F) étant effectuée sur la base de la première consommation d'énergie et en tenant compte de la position de destination ;

• acquérir des quatrièmes signaux de données qui comprennent des informations concernant un deuxième itinéraire ;

le deuxième itinéraire étant un itinéraire différent du premier itinéraire de la position de départ du véhicule à la position de destination ;

• acquérir des cinquièmes signaux de données qui comprennent des informations concernant des deuxièmes paramètres d'environnement le long du deuxième itinéraire, y compris des informations concernant au moins une deuxième température extérieure sur au moins un tronçon le long du deuxième itinéraire ;

• calculer une deuxième demande de puissance partielle de climatisation à attendre pour le véhicule (F) le long du deuxième itinéraire sur la base des deuxièmes signaux de données, des cinquièmes signaux de données et du modèle de véhicule du véhicule (F),

la deuxième demande de puissance partielle de climatisation calculée comprenant au moins une demande de puissance pour fournir la température d'habitacle de véhicule en fonction de la température de consigne d'un habitacle de véhicule et en fonction de ladite au moins une deuxième température extérieure ;

• calculer au moins une deuxième demande de puissance partielle à attendre supplémentaire pour le véhicule (F) ;

• calculer une deuxième demande de puissance résultante à attendre comme la somme de la deuxième demande de puissance partielle de climatisation et de ladite au moins une deuxième demande de puissance partielle supplémentaire ;

• calculer, sur la base d'une courbe de la deuxième demande de puissance résultante à attendre déterminée le long du deuxième itinéraire, une deuxième consommation d'énergie du véhicule (F) le long du deuxième itinéraire ; et

• déterminer un itinéraire optimal avec une consommation d'énergie minimale pour le véhicule (F) à partir d'une quantité comprenant le premier et ledit au moins un deuxième itinéraire ;

l'exploitation du véhicule (F) étant effectuée sur la base de l'itinéraire optimal déterminé.

2. Procédé selon la revendication 1, dans lequel les premiers signaux de données comprennent en outre des informations concernant au moins l'un des paramètres d'environnement suivants : une heure, une date, un vent de déplacement, des conditions météorologiques sur au moins un premier tronçon le long du premier itinéraire, une humidité de l'air sur au moins un deuxième tronçon le long du premier itinéraire et/ou un rayonnement solaire sur au moins un troisième tronçon le long du premier itinéraire.

3. Procédé selon l'une quelconque des revendications précédentes 1 et 2, dans lequel les deuxièmes signaux de données comprennent en outre des informations concernant au moins l'un des paramètres internes au véhicule suivants : un nombre actuel de personnes à bord du véhicule (F), une vitesse de consigne spécifiée pour un régulateur de vitesse du véhicule (F) ou une plage de vitesse de consigne spécifiée pour un régulateur de vitesse du véhicule (F), une température d'habitacle de véhicule actuelle, une humidité de l'air d'un habitacle de véhicule actuelle, une teneur en $CO_2$ d'un habitacle de véhicule actuelle, une réserve d'énergie actuelle du véhicule (F) et/ou une température intérieure de vitre d'une vitre du véhicule.

4. Procédé selon l'une quelconque des revendications précédentes 1 à 3, dans lequel le modèle de véhicule comprend des informations concernant au moins l'un des éléments suivants : une demande de puissance du véhicule (F) lorsqu'un feu du véhicule (F) est allumé, une demande de puissance d'un système de propulsion du véhicule (F) en fonction d'une vitesse du véhicule, une demande de puissance du système de propulsion du véhicule (F) en fonction d'une nature d'une route, une consommation de carburant du système de propulsion du véhicule (F) en fonction de la demande de puissance du système de propulsion, une masse du véhicule, un rendement du système de propulsion du véhicule (F), et/ou une demande de puissance du véhicule (F) pour fournir une humidité de l'air d'un habitacle de véhicule déterminée du véhicule (F) en fonction d'une humidité de l'air extérieure.

5. Procédé selon l'une quelconque des revendications précédentes 1 ou 3, comprenant les étapes supplémentaires consistant à :

   • déterminer une autonomie du véhicule (F) le long au moins du premier itinéraire, sur la base d'une réserve d'énergie actuelle du véhicule et sur la base au moins de la première demande de puissance résultante à attendre calculée du véhicule (F) le long au moins du premier itinéraire ; les deuxièmes signaux de données comprenant en outre au moins des informations concernant la réserve d'énergie actuelle du véhicule (F) ;

   l'exploitation du véhicule (F) étant effectuée sur la base de l'autonomie déterminée du véhicule (F).

6. Procédé selon l'une quelconque des revendications précédentes 1 à 5,
   dans lequel les deuxièmes données comprennent des informations concernant une plage de vitesse de consigne prédéterminée pour le véhicule (F) ;
   dans lequel, pour chaque valeur de vitesse des vitesses à l'intérieur de la plage de vitesse de consigne prédéterminée, la première demande de puissance partielle à attendre supplémentaire est calculée pour le véhicule (F) ;
   dans lequel, pour chaque valeur de vitesse des vitesses à l'intérieur de la plage de vitesse de consigne prédéterminée, la première demande de puissance résultante supplémentaire à attendre est calculée comme la somme de la première demande de puissance partielle de climatisation à attendre calculée et de la première demande de puissance partielle à attendre supplémentaire pour le véhicule (F), selon la valeur de vitesse ; et
   le procédé présentant en outre l'étape consistant à :

   • déterminer la vitesse à l'intérieur de la plage de vitesse de consigne pour laquelle la plus petite première demande de puissance résultante à attendre pour le véhicule (F) a été calculée ; et

   l'exploitation (S07) du véhicule comprenant un réglage de la vitesse actuelle du véhicule (F) sur la vitesse déterminée à l'intérieur de la plage de vitesse de consigne.

7. Dispositif (10) permettant de faire fonctionner un véhicule (F), comprenant :

   un dispositif d'entrée (10) réalisé sur le véhicule, un premier dispositif d'acquisition de données (11) réalisé sur le véhicule (F), un deuxième dispositif d'acquisition de données (12) réalisé sur le véhicule (F), un dispositif de stockage (13) réalisé sur le véhicule (F), un dispositif de calcul (14) réalisé sur le véhicule (F), et un dispositif de commande (15) réalisé sur le véhicule (F) ;
   le dispositif d'entrée (9) étant réalisé pour régler (S01) une condition de fonctionnement de véhicule ;
   le premier dispositif d'acquisition de données (11) étant réalisé pour acquérir (S02 ; S02') des premiers signaux de données qui comprennent des informations concernant un premier paramètre d'environnement, y compris des informations concernant une première température extérieure ;
   le deuxième dispositif d'acquisition de données (12) étant réalisé pour acquérir (S03 ; S03') des deuxièmes signaux de données qui comprennent des informations concernant des paramètres internes au véhicule, y compris des informations concernant une température de consigne d'un habitacle de véhicule pour le véhicule (F) ;
   dans lequel le dispositif de stockage (13) est réalisé au moins pour stocker un modèle de véhicule du véhicule (F), le modèle de véhicule comprenant des informations concernant une demande de puissance du véhicule (F) pour fournir une température d'habitacle de véhicule en fonction de la température de consigne d'un habitacle de véhicule et en fonction de la première température extérieure ;
   dans lequel le dispositif de calcul (14) est réalisé pour calculer (S04 ; S04') une première demande de puissance partielle de climatisation à attendre pour le véhicule (F) sur la base au moins des premiers signaux de données, des deuxièmes signaux de données et du modèle de véhicule du véhicule (F),

dans lequel la première demande de puissance partielle de climatisation à attendre calculée comprend au moins la demande de puissance pour fournir la température d'habitacle de véhicule en fonction de la température de consigne d'un habitacle de véhicule et en fonction de la première température extérieure ;

le dispositif de calcul (14) étant en outre réalisé pour calculer (S05 ; S05') au moins une première demande de puissance partielle à attendre supplémentaire pour le véhicule (F), et

pour calculer (S06 ; S06') une première demande de puissance résultante à attendre comme la somme de la première demande de puissance partielle de climatisation et de ladite au moins une première demande de puissance partielle supplémentaire ;

le dispositif de commande (15) étant réalisé pour faire fonctionner (S07 ; S07') le véhicule (F) sur la base de la première demande de puissance résultante à attendre déterminée en tenant compte de la condition de fonctionnement de véhicule ; et

le dispositif (10) étant aménagé pour exécuter le procédé selon l'une quelconque des revendications précédentes 1 à 6.

8.  Dispositif selon la revendication 7, dans lequel le deuxième dispositif d'acquisition de données (12) comprend une interface de communication sans fil (16) pour recevoir au moins certains des deuxièmes signaux de données.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011054457 A1
- KR 20120073843 A
- US 2013238180 A1
- DE 102011116184 A1